## Europäisches Patentamt
## European Patent Office
## Office européen des brevets

(11) Veröffentlichungsnummer: **0 291 652**
**A2**

(12) **EUROPÄISCHE PATENTANMELDUNG**

(21) Anmeldenummer: **88103862.4**

(51) Int. Cl.⁴: **C05F 3/00**

(22) Anmeldetag: **11.03.88**

(30) Priorität: **20.05.87 DE 3716854**

(43) Veröffentlichungstag der Anmeldung:
**23.11.88 Patentblatt 88/47**

(84) Benannte Vertragsstaaten:
**AT CH DE FR LI NL**

(71) Anmelder: **Baumgärtner, Eugen**
**Glenanthstrasse 9**
**D-6750 Kaiserslautern(DE)**

(72) Erfinder: **Baumgärtner, Eugen**
**Glenanthstrasse 9**
**D-6750 Kaiserslautern(DE)**

(74) Vertreter: **Bernhardt, Winfrid, Dr.-Ing.**
**Kobenhüttenweg 43**
**D-6600 Saarbrücken(DE)**

(54) **Geschlossenes Behältnis mit flüssigem Gartendünger sowie Verfahren zum Erzeugen und Abfüllen des Gartendüngers.**

(57) Ein flüssiger Gartendünger in Form eines hitze-behandelten wäßrigen Extraktes aus Pferde-, Hühner- und/oder Taubenmist in einem unter Ausschluß eines Luftrestes gefüllten, lichtundurchlässigen geschlossenen Behältnis.

EP 0 291 652 A2

## "Geschlossenes Behältnis mit flüssigem Gartendünger sowie Verfahren zum Erzeugen und Abfüllen des Gartendüngers"

Die Erfindung betrifft ein geschlossenes Behältnis mit flüssigem Gartendünger.

Ferner betrifft sie ein Verfahren zum Erzeugen des Gartendüngers und Abfüllen in das Behältnis.

Flüssige Gartendünger sind als künstliche Düngemittel bekannt.

Der Erfindung liegt die Aufgabe zugrunde, ein natürliches Düngemittel in Form eines flüssigen Gartendüngers zu schaffen.

Gemäß der Erfindung erfüllt diesen Zweck ein in einem geschlossenen Behältnis abgefülltes, hitzebehandeltes wäßriges Extrakt aus Mist.

Ein wäßriges Extrakt aus Mist sind in der einfachsten, unkontrollierten Form die Jauche, die aus Urin und von diesem aus dem Stall mitgenommenen Kotbestandteilen besteht, sowie die Flüssigkeit, die sich unter dem vom Regen ausgelaugten landwirtschaftlichen Misthaufen sammelt. Normalerweise wird in der Jauche sowie in der genannten Flüssigkeit die Konzentration der wertvollen Düngestoffe für den vorgeschlagenen Zweck jedoch zu gering und zu schwankend sein; allerdings könnte man durch Abfiltrieren von Wasser oder durch Zugaben zu einer gewünschten, gleichbleibenden Konzentration gelangen. Wertvoller werden im Rahmen des vorliegenden Vorschlags eigens ausgewählte und zu sammengestellte Miste und aus diesen eigens gewonnene Extrakte sein.

Die Erfindung schließt nämlich die Erkenntnis ein, daß wesentliche wertvolle Düngstoffe, wohl durch die Tätigkeit der Mikroorganismen, an der Luft verhältnismäßig schnell abgebaut und verflüchtigt werden, so daß das Extrahieren noch frischerer Miste und die baldige Lagerung des Extraktes unter Luftabschluß zu einem viel wertvolleren Erzeugnis führen, das die Verwendung in kleinen Gebinden als Gartendünger lohnt. In frischem und in gleichem unter Luftabschluß gelagertem Extrakt wurde ein Stickstoffgehalt von 10,9% analysiert, während in einem ursprünglich gleichen, aber 9 Monate an Luft gelagertem Extrakt noch 2,4 bis 2,5% Stickstoff vorhanden waren.

Die vorgesehene Lagerung in kleinen Behältnissen, wie Flaschen von 300 bis 750 cm$^3$ Inhalt, ist allerdings hinsichtlich der Organismentätigkeit trotz des Luftabschlusses noch problematisch. Mit gelöstem Sauerstoff oder auch ohne kommt es ohne weitere Maßnahmen immer wieder zu Gasentwicklung, die zu starkem Ausbauchen der, zweckmäßigerweise aus Kunststoff bestehenden, Flaschen und zur Gefahr des Platzens führt.

In der Ursprungsanmeldung war deshalb empfohlen worden, die Zersetzung der Mikroorganismen einen gewissen Grad erreichen zu lassen, ehe das Extrakt abgefüllt wird. Dazu sollte das Extrakt möglichst 3 bis 5 Wochen Verweilzeit erhalten und währenddessen mehrfach umgefüllt werden und auch nach dem Abfüllen in die Flaschen noch einmal offen stehen. Nötigenfalls sollte auf Schwefeln zurückgegriffen werden.

Inzwischen wurde ein viel wirksameres Mittel gefunden. Das Extrakt soll gekocht oder jedenfalls sonst einer die Mikroorganismen tötenden oder wesentlich schädigenden Hitzebehandlung unterzogen werden: Was zum Keimfreimachen von medizinischen Instrumenten u. dgl. und zum Haltbarmachen von Lebensmitteln dient, kann ebenso, wenn damit auch das oberste mit dem untersten Extrem der Sauberkeit und Appetitlichkeit verglichen wird, die Tätigkeit der Mikroorganismen im Kot stoppen. Besonders vorteilhaft ist dies unter dem oben angegebenen Gesichtspunkt, daß, wie gefunden, während einer Lagerung an der Luft der Stickstoffgehalt rapide sinkt.

Die nach der Ursprungsanmeldung vorgesehene 3 bis 5-wöchige Verweilzeit an Luft vor dem Abfüllen, während derer der Dünger demnach an Wert verlor, kann nun weitgehend entfallen und erst recht die an sich unerwünschte Schwefelung.

Interessant und vorteilhaft ist, wie weiter gefunden wurde, daß die Hitzebehandlung erstens jedenfalls in keinem beachtlichen Maße die wertvollen Düngstoffe zerstört oder austreibt und daß sie zweitens eine sofortige Wiederbelebung des Düngers mit Organismen erlaubt, wenn er an die Luft kommt, so daß bei der Anwendung der erwünschte natürliche Zustand umgehend wiederhergestellt ist. Nach einer Schwefelung wäre daran nicht zu denken.

Die Wiederbelebung an der Luft verlangt auch weiterhin, das Behältnis unter sorgfältigem Ausschluß eines Luftrestes zu schließen, vorzugsweise mittels eines konischen Stopfens, bei dessen Einschieben wieder etwas Extrakt herausgedrückt wird, und zusätzlich mittels einer Schraubkappe. Der Stopfen unter der Schraubkappe hat dann den weiteren Vorteil, später unbefugtes Öffnen zu erschweren, das wieder mit Lufteintritt verbunden wäre.

Auch sollte vor der Hitzebehandlung weiterhin die Zersetzung der extrahierten Mistbestandteile durch Mikroorganismen einen gewissen Grad erreichen und zu diesem Zweck das Extrakt während des Extrahierens durch Umschöpfen und nach dem Extrahieren durch Einrühren und/oder Einschlagen von Luft belüftet werden; die betreffenden Vorgänge, bei denen Sauerstoff verbraucht wird, werden dadurch vorangetrieben. Man mag das Extrakt vor der Hitzebehandlung auch noch einige Zeit, vielleicht 5 bis 10 Tage, an der Luft stehen lassen.

Nach der Hitzebehandlung sollte es allerdings, wie sich aus dem vorstehenden ergibt, umgehend abgefüllt werden und jedenfalls bis dahin mindestens unter Abdeckung, vorzugsweise unter Luftabschluß, gehalten werden.
Am besten wird es schon während des Abkühlens oder sofort danach abgefüllt.

Um die ohne großen Aufwand verfügbaren Mittel gegen eine Wiederbelebung während der Lagerung in dem Behältnis voll auszuschöpfen, wird aufgrund einer weiteren in diesem Zusammenhang gewonnenen Erkenntnis in weiterer Ausgestaltung der Erfindung vorgeschlagen, ein lichtundurchlässiges oder nur wenig Licht durchlassendes Behältnis zu verwenden, also z.B. eine Flasche aus pigmentiertem Kunststoff. Auch Licht fördert eine Wiederbelebung der Mikroorganismen, besonders Ultraviolettlicht.

Die Aufbewahrung sollte ferner kühl erfolgen, vorzugsweise bei 6 bis 10°C.

Im übrigen bleibt es weiter vorzugsweise bei dem Vorschlag einer Extrahierung von Pferde-, Hühner- und/oder Taubenmist.

Infolge der Fütterung der genannten Tiere mit hochwertigem Futter, weitgehend mit Kornfutter, enthält auch der Kot dieser Tiere wertvolle Düngestoffe, die die Herstellung eines Flüssigdüngers als Extrakt technisch-wirtschaftlich sinnvoll machen. Hühner- und Taubenmist bringt Kalk hinzu, den der Organismus der Vögel zur Bildung der Eierschalen erzeugt. Ferner ist er reich an Stickstoff und Phosphat.

Zweckmäßigerweise wird die Herstellung des vorgeschlagenen Flüssigdüngers am Ort einer Pferdehaltung eingerichtet und Hühnermist aus einer Hühnerfarm hinzugeholt. Die Umkehrung würde mehr Transportaufwand erfordern, zumal der Pferdemist den Hauptbestandteil stellen mag und ein vergleichsweise großes Volumen an Stroh als Ballastmaterial enthält.

Hühnermist als überwiegender Bestandteil oder gar allein dürfte in der Regel für die Pflanzen zu - scharf sein. Auch führt Pferdemist als Basis zu einem besseren Geruch des Düngers. Pferdestallgeruch ist bekanntlich nicht unangenehm.

Taubenmist wird meist nur in geringer Menge zu beschaffen sein.

Günstige Zusammensetzungen werden im Bereich 60 bis 90% Pferdemist, 10 bis 30% Hühnermist und bis zu 10% Taubenmist liegen.

Das erfindungsgemäße Verfahren besteht demgemäß bevorzugt darin, daß Pferde-, Hühner- und/oder Taubenmist mit Wasser extrahiert wird und das Extrakt gesiebt und/oder gefiltert wird, hitzebehandelt wird und unter Ausschluß eines Luftrestes in das Behältnis gefüllt wird und das Behältnis geschlossen wird.

Vorzugsweise wird zum Erzeugen des Extraktes Pferdemist mit Wasser in einem Behälter angesetzt, in dem der Pferdemist durch ein Gitter auf einen Teil des Behälterraumes beschränkt ist und das Extrakt wiederholt auf den Pferdemist umgeschöpft wird.

Hühner- und/oder Tauben mist, der weniger Grobbestandteile enthält, wird dann zweckmäßigerweise in den anderen Teil des Behälterraums gegeben und/oder, vorzugsweise, erst nach Aufschluß des Pferdemistes und Abschöpfen seiner aufgeschwommenen Bestandteile zugegeben.

Das Extrakt kann man danach noch mit einem die Bestandteile des Extraktes ergänzenden und/oder aufkonzentrierenden Zusatz versehen. Insbesondere in Betracht kommt eine Erhöhung des Gehaltes an oxidierbarem Kohlenstoff, um derzeit geltenden RAL-Bedingungen zu genügen. Dazu können feinzerkleinerte Feststoffe dienen, z.B. Sägemehl oder Torfmehl.

Das erfindungsgemäße Extrakt wird indessen ohne solchen Kohlenstoffzusatz als besser erachtet; die Erhöhung des Kohlenstoffanteils drängt die Anteile anderer wertvoller Stoffe zurück. Da das Extrakt verdickende Zusätze auch ein Abfüllen in gleichbleibender Konzentration erschweren und ferner die Haltbarkeit verschlechtern können, wird der Ausweg vorgeschlagen, den Zusatz in Form eines trockenen Pulvers beizupacken und erst bei der Verwendung dem Flüssigdünger zuzugeben, d.h. in das Behältnis zu füllen.

Der Flüssigdünger kann hochkonzentriert und in gleichbleibender Qualität hergestellt werden.

Die Zusammenstellung der als Ausgangsprodukte dienenden Miste könnte durch Analysen der Miste und durch eine gartenwirtschaftliche Bedarfsanalyse noch optimiert werden.

Im folgenden sei ein Ausführungsbeispiel noch etwas näher beschrieben:

Es wird ein Extrakt hergestellt aus etwa 80% Pferdemist, 15% Hühnermist und 5% Taubenmist. Das dürfte eine besonders geeignete Ausgangszusammensetzung sein.

Verwendet wird ein Behälter von beispielsweise 1000 1 Inhalt und 0,7 m Höhe, passend also, von Hand beschickt, entleert und auch sonst bedient zu werden. Solche Behälter sind aus dem Weinbau bekannt. Der Behälter wird durch ein senkrechtes Gitter 1/3 zu 2/3 unterteilt. In den größeren Teilraum wird Pferdemist eingebracht. Dann wird mit Wasser gefüllt.

Das Wasser laugt so den Pferdemist aus. Gelegentlich wird umgeschöpft, um das Extrakt aus dem kleineren Raum wieder über den Pferdemist zu bringen und ihn durchdringen und so weiter auslaugen zu lassen.

Das erfindungsgemäße Verfahren und Erzeugnis ist, wohlgemerkt, ein landwirtschaftliches.

Nach einer Woche etwa ist der Pferdemist so weit aufgeschlossen, daß das Stroh und andere leichte Bestandteile oben schwimmen, Sand, Steine, Erde und auch die Spelzen sich unten abgesetzt haben und das übrige ein dünner Brei ist.

Die aufgeschwommenen Bestandteile werden nun abgeschöpft. Dann wird Hühnermist und Taubenmist zugegeben. Nach einem Verrühren, um den Hühnermist und Taubenmist schon mechanisch möglichst weit aufzuschließen, wird der Ansatz noch einmal eine Woche stehengelassen.

Dann wird der Brei umgepumpt. Der Bodensatz bleibt in dem Behälter und wird anschließend weggeworfen.

Der Brei wird in seinem neuen Behälter beispielsweise eine weitere Woche stehengelassen und wiederholt gerührt.

Dann wird er wiederum in einen anderen Behälter umgepumpt und dabei gesiebt, z.b. mit einer Maschenweite von 1 bis 3 mm.

Nun wird das Extrakt in einem geschlossenen Behälter erhitzt, etwa 90 Min. auf 100°C gehalten und dann abkühlen gelassen. Schon während des Abkühlens wird begonnen, in der bereits ausreichend beschriebenen Weise in Flaschen abzufüllen. Dabei ist auf Sauberkeit zu achten; eine Flasche mit einem Rest einer früheren Abfüllung z.B. kann nicht verwendet werden, wie weiter unten zu entnehmen.

Die ab 60°C bis Raumtemperatur gefüllten und sofort verschlossenen Kunststoff-Flaschen ließen später keine Gasentwicklung ihres Inhalts erkennen, sie zeigten keine Ausbauchung an ihrer eckigen Gestalt.
Nach dem Abkühlen noch vier Tage an Luft aufbewahrtes und erst dann in Flaschen gefülltes Extrakt erwies sich nicht in der gewünschten Weise als haltbar. Die Flaschen bauchten sich.

Nach dem Abkühlen in einem offenen Gefäß im Garten abgestelltes Extrakt ließ nach 14 Tagen mit bloßem Auge Leben erkennen.

Der Flüssigdünger hatte folgende Analysenwerte:
Wasser 97,7%
Trockensubstanz 2,3%
darin Stickstoff 10,9%
Kohlenstoff (oxidierbar) 23,7%
Blei 25 ppm
Cadmium < 0,3 ppm
Chrom 14,2 ppm
Kupfer 91 ppm
Nickel 19 ppm
Quecksilber 0,08 ppm
pH 6,1.
Ein gleicher Flüssigdünger mit Zusatz von Sägemehl hatte:
Wasser 92,8%
Trockensubstanz 7,2%
darin Stickstoff 2,8%
Phosphat (ges.) 2,0%
Kali 2,9%
Kalk 1,9%
Magnesium 0,37%
Kohlenstoff 41,6%
Blei 10,9 ppm
Cadmium < 0,3 ppm
Chrom < 2,0 ppm
Kupfer 18 ppm
Nickel 4,0 ppm
Quecksilber 0,05 ppm
ph 5,9.

**Ansprüche**

1. Geschlossenes Behältnis mit flüssigem Gartendünger,
dadurch gekennzeichnet,
daß es ein hitzebehandeltes wäßriges Extrakt aus Mist enthält.

2. Behältnis nach Anspruch 1,
dadurch gekennzeichnet,
daß es ein Extrakt aus Pferde-, Hühner- und/oder Taubenmist enthält.

3. Behältnis nach Anspruch 2,
dadurch gekennzeichnet,
daß es ein Extrakt aus 60 bis 90% Pferdemist, 10 bis 30% Hühnermist und bis zu 10% Taubenmist enthält.

4. Behältnis nach einem der Ansprüche 1 bis 3,
dadurch gekennzeichnet,
daß das Extrakt mit einem die Bestandteile des Extrakts ergänzenden und/oder aufkonzentrierenden Zusatz versehen ist.

5. Behältnis nach Anspruch 1,
dadurch gekennzeichnet,
daß der Zusatz feinzerkleinerte Feststoffe enthält.

6. Behältnis nach einem der Ansprüche 1 bis 5,
dadurch gekennzeichnet,
daß es unter Ausschluß eines Luftrestes gefüllt ist.

7. Behältnis nach einem der Ansprüche 1 bis 6,
dadurch gekennzeichnet,
daß es lichtgeschützt, vorzugsweise lichtundurchlässig, ist.

8. Verfahren zum Erzeugen des flüssigen Gartendüngers und Abfüllen in das Behältnis nach einem der Ansprüche 1 bis 7,
dadurch gekennzeichnet,
daß Mist, vorzugsweise frischer Mist, vorzugsweise Pferde-, Hühner- und/oder Taubenmist, mit Wasser extrahiert wird und das Extrakt gesiebt und/oder gefiltert wird, hitzebehandelt wird und unter Ausschluß eines Luftrestes in das Behältnis gefüllt wird und das Behältnis geschlossen wird.

9. Verfahren nach Anspruch 8,
dadurch gekennzeichnet,
daß zum Erzeugen des Extraktes Pferdemist mit Wasser in einem Behälter angesetzt wird, in dem der Pferdemist durch ein Gitter auf einen Teil des Behälterraumes beschränkt ist und das Extrakt wiederholt auf den Pferdemist umgeschöpft wird.

10. Verfahren nach Anspruch 9,
dadurch gekennzeichnet,
daß der Hühner- und/oder Taubenmist in den anderen Teil des Behälterraums gegeben und/oder, vorzugsweise, nach Aufschluß des Pferdemistes und Abschöpfen seiner aufgeschwommenen Bestandteile zugegeben wird.

11. Verfahren nach einem der Ansprüche 8 bis 10,
dadurch gekennzeichnet,
daß das Extrakt während des Extrahierens durch Umschöpfen und/oder nach dem Extrahieren durch Einrühren und/oder Einschlagen von Luft belüftet wird.

12. Verfahren nach einem der Ansprüche 8 bis 11,
dadurch gekennzeichnet,
daß das Extrakt bis zur Hitzebehandlung 5 bis 10 Tage Verweilzeit erhält.

13. Verfahren nach einem der Ansprüche 7 bis 12,
dadurch gekennzeichnet,
daß das Extrakt nach der Hitzebehandlung bis zum Abfüllen mindestens unter Abdeckung, vorzugsweise unter Luftabschluß, gehalten wird.

14. Verfahren nach einem der Ansprüche 8 bis 13,
dadurch gekennzeichnet,
daß das Extrakt während des Abkühlens oder unmittelbar nach dem Abkühlen abgefüllt wird.

15. Verfahren nach einem der Ansprüche 8 bis 12,
dadurch gekennzeichnet,
daß das Behältnis unter Ausschluß eines Luftrestes geschlossen wird, vorzugsweise mittels eines konischen Stopfens und zusätzlich mittels einer Schraubkappe.